(19) Europäisches Patentamt
European Patent Office
Office européen des brevets

(11) **EP 1 199 794 B1**

(12) **EUROPÄISCHE PATENTSCHRIFT**

(45) Veröffentlichungstag und Bekanntmachung des Hinweises auf die Patenterteilung:
**09.06.2004 Patentblatt 2004/24**

(51) Int Cl.⁷: **H02M 5/297**, H02M 5/20, H02M 5/257, H02M 5/27

(21) Anmeldenummer: **01123942.3**

(22) Anmeldetag: **08.10.2001**

(54) **Verfahren zum Betrieb eines Matrixkonverters sowie Matrixkonverter zur Durchführung des Verfahrens**

Method for operating a matrix converter and matrix converter for carrying out this method

Procédé pour le fonctionnement d'un convertisseur à matrix et tel convertisseur pour la mise en oeuvre de ce procédé

(84) Benannte Vertragsstaaten:
**AT DE FR GB IT**

(30) Priorität: **16.10.2000 DE 10051222**

(43) Veröffentlichungstag der Anmeldung:
**24.04.2002 Patentblatt 2002/17**

(73) Patentinhaber: **ALSTOM Technology Ltd 5400 Baden (CH)**

(72) Erfinder:
• **Lacaze, Alain
90850 Essert (FR)**
• **Turri, Sylvie
70170 Port-Sur-Saône (FR)**

(56) Entgegenhaltungen:
US-A- 4 439 823        US-A- 5 594 636
US-A- 5 949 672

**Beschreibung**

TECHNISCHES GEBIET

Die vorliegende Erfindung bezieht sich auf das Gebiet der Leistungselektronik und insbesondere auf die Stromerzeugung mit einem Synchrongenerator, der oberhalb der synchronen Netzfrequenz betrieben wird, sowie den Antrieb von Synchronmotoren und Induktionsmotoren mit wechselnder Geschwindigkeit.
Die Erfindung betrifft ein Verfahren zum Betrieb eines Matrixkonverters gemäss dem Oberbegriff des Anspruchs 1. Sie betrifft weiterhin einen Matrixkonverter zur Durchführung des Verfahrens.

STAND DER TECHNIK

Bei der Stromerzeugung führt die Erhöhung der Drehzahl einer Turbine bei vorgegebener Leistung zu einer Verringerung der Grösse und der Kosten. Auch der Wirkungsgrad kann verbessert werden. Turbinen für die Stromerzeugung bis hinauf zu 70 MW werden bereits über Getriebe mit den Generatoren verbunden, um höhere Drehzahlen zu ermöglichen. Bei höheren Leistungen wird der Einsatz von Getrieben aus Sicherheitsgründen zunehmend schwierig. Die Turbine wird dann mit Synchrongeschwindigkeit betrieben.
Wenn ein Getriebe verwendet wird, ergeben sich die folgenden Nachteile:

- ein festes Uebersetzungsverhältnis;
- ein Geräuschpegel oberhalb von 100 db für 40 MW bzw. 115 db für 70 MW;
- mechanische Verluste, die nicht von der jeweiligen Last abhängen; und
- hohe Anforderungen an die Kühlung und Schmierung mit Oel;

Eine Alternative wäre der Einsatz von statischen Frequenzkonvertem (Leistungselektronik). Die erwarteten Vorteile wären:

- verringerte Kosten für den Generator in Uebereinstimmung mit einem konstanten Produkt aus Volumen und Drehzahl;
- ein standardisierter Generator für sowohl 50 als auch 60 Hz;
- eine einstellbare Geschwindigkeit, welche die Wiederherstellung des Teillast-Wirkungsrades der Turbine ermöglicht;
- reduzierte Verluste im Bezug auf das Getriebe zumindest bei Teillast;
- eine erhebliche Geräuschverminderung;
- eine saubere (ölfreie) Kühlung;
- keine Obergrenze der möglichen Leistung, wodurch eine erhebliche Kostenreduktion bei der Turbine durch Verkleinerung ermöglicht wird, während ein Getriebe nicht dieselbe Möglichkeit bietet; und
- Verwendung des Generators als Startermotor (bei Gasturbinen-Anwendungen).

Sowohl bei der Stromerzeugung als auch bei Antrieben würde die Verringerung von Verlusten der statischen Frequenzkonverter erhebliche Kosteneinsparungen zur Folge haben. Eine Verringerung der Verluste würde vor allem die Investitionskosten beeinflussen, weil die Kühlung einen wesentlichen Teil der Gesamtkosten des Konverters ausmacht.
Weiterhin eröffnen reduzierte Anforderungen an die Kühlung die Möglichkeit, die Elektronik kompakter zu gestalten, und damit die Integration der Leistungselektronik in die Kraftwerksanlage oder sogar in die Generatoreinheit zu erleichtern. Eine nahe Integration der Leistungselektronik in die Generatoreinheit hätte den zusätzlichen Vorteil kurzer Verbindungsleitungen, gemeinsam benutzter Kühlungseinrichtungen und eines kleineren Gesamtvolumens (Einsparungen bei Gebäuden).
Auch im Bereich der grossen Antriebe bis zu einigen 10 MW ergeben sich diese Vorteile aus den reduzierten Verlusten und schaffen so einen wettbewerbsmässigen Vorteil gegenüber direkten mechanischen Antrieben von einer Turbine.
Statische Frequenzkonverter gibt es sowohl mit indirekter AC/DC/AC-Umwandlung als auch mit direkter AC/AC-Umwandlung.
Die indirekte Umwandlung (AC/DC/AC) wird bewirkt durch Erzeugung eines gerichteten Gleichstromes oder einer gerichteten Gleichspannung aus der dreiphasigen Quelle (Netz für Motoren, Generator für die Stromerzeugung). Der Gleichstrom oder die Gleichspannung werden dann durch einen Inverter wieder in einen Wechselstrom umgewandelt.
Eine Induktivität (Stromkonverter) oder eine Kondensatorbank (Spannungskonverter) werden in den Zwischenkreis eingeschaltet, um die Welligkeit des Stromes bzw. Spannungsspitzen zu reduzieren.

Heutige Konverter setzen Thyristoren ein. Wenn eine natürliche Kommutierung der Thyristoren möglich ist, werden die Verluste im Konverter reduziert. Induktionsmotoren beispielsweise nehmen jedoch reaktive Leistung auf. Um diese reaktive Leistung aus dem Netz zur Verfügung zu stellen, sollte es möglich sein, den Strom in einem vorgegebenen Arm des Konverters zu einem beliebigen Zeitpunkt abschalten zu können. In diesem Fall liegen eine Zwangskommutierung und damit erhöhte Verluste vor. In der elektrischen Maschine (Generator oder Motor) sind die Phasenströme zerhackte Gleichströme. Die Ankerrückwirkung rotiert nicht mit konstanter Geschwindigkeit und Amplitude, sondern springt gemäss dem Kommutierungszyklus herum. Ein 6- oder 12-pulsiger Konverter gibt sechs oder zwölf verschiedene Winkelpositionen für die Ankerrückwirkung. Hieraus ergeben sich starke pulsierende Drehmomente und grosse zusätzliche Verluste in der elektrischen Maschine, die zu einer Verschlechterung der Maschine führen können. In 12-pulsigen Konvertern ist der Effekt 4mal geringer als in 6-pulsigen.

Spannungskonverter verwenden GTOs mit ihren inhärenten hohen Schaltverlusten, sowie IGBTs oder IGCTs. Die einzelnen Bauelemente haben eine geringere Leistung als Thyristoren, so dass mehr Bauteile für eine vorgegebene Spannung bzw. einen vorgegebenen Strom benötigt werden. Spannungskonverter können vom Einsatz von Pulsbreitenmodulations-Techniken profitieren, welche die Form der Stromkurven verbessern und die Harmonischen reduzieren. Je höher dabei die Schaltfrequenzen sind, um so besser, ausser im Hinblick auf Verluste und dielektrische Ermüdung. Die Kurvenform des Stromes kann weitgehend sinusförmig sein, so dass ein Leistungsabfall der elektrischen Maschine vermieden wird.

Eine direkte Umwandlung (AC/AC) ist beispielsweise durch einen sogenannten Zyklokonverter möglich. Sie hat erhebliche Vorteile auf der Seite der elektrischen Maschine, da der Strom mehr oder weniger eine Sinuswelle ist und nicht ein zerhackter Gleichstrom. Sie reduziert die Höhe der zusätzlichen innerhalb der elektrischen Maschine anfallenden Verluste, und sie vermeidet pulsierende Drehmomente.

Beim Einsatz von Zyklokonvertem ist der erzielbare Frequenzbereich jedoch auf 0 - 1/3 der Eingangsfrequenz beschränkt. Das Ueberschreiten der 1/3-Grenze führt wegen des nicht-ausgeglichenen Betriebes zu einer Ueberdimensionierung bis zu einem Faktor 3.

Eine andere Möglichkeit der direkten Umwandlung ist durch einen sogenannten Matrixkonverter gegeben, bei dem jede Phase einer mehrphasigen Quelle (Generator oder Netz) mit jeder Phase einer mehrphasigen Last (Netz, passive Last, Motoren, etc.) jeweils durch einen bidirektionalen Schalter verbunden bzw. verbindbar ist (siehe z.B. N. Mohan et al., Power Electronics, 2. Edition, John Wiley & Sons, New York, S. 11-12). Die Schalter bestehen aus Thyristoren in ausreichender Zahl, um die Differenzspannung zwischen den Phasen und die Phasenströme auszuhalten, und um eine Stromumkehr zu ermöglichen. Sie können als wahrhaft bidirektionale Bauelemente angenommen werden, mit der Möglichkeit, Zusatzbeschaltungen wie Snubber oder die Stromversorgungen für die Ansteuerimpulse für die antiparallelen Bauelemente gemeinsam zu benutzen.

Die Schalter sind bei m Phasen der Quelle und n Phasen der Last in einer (m x n)-Matrix angeordnet. Dies schafft die Möglichkeit beliebiger Verbindungen zwischen den Eingangsphasen und Ausgangsphasen, hat aber zugleich den Nachteil, dass bestimmte Schaltzustände der Matrix nicht erlaubt sein dürfen, weil sonst beispielsweise ein Kurzschluss auftritt. Des weiteren ist es wünschenswert, die Kommutierung von einer Phase auf eine andere Phase so durchzuführen, dass möglichst geringe Schaltverluste anfallen.

In der US-A-5,594,636 ist ein Matrixkonverter und ein Verfahren zu seinem Betrieb beschrieben, bei dem die Kommutierung zwischen den Phasen teilweise als natürliche Kommutierung durchgeführt wird, aber auch als Zwangskommutierung, wenn eine natürliche Kommutierung nicht möglich ist. Obwohl aufgrund der natürlichen Kommutierung die Schaltverluste bei dieser Art der Ansteuerung verringert sind, verbleiben die Schaltverluste, die bei der Zwangskommutierung entstehen. Darüber hinaus müssen wegen der möglichen Zwangskommutierung auf allen Plätzen der Matrix abschaltbare Bauelemente eingesetzt werden, wodurch der Schaltungsaufwand erheblich erhöht wird.

DARSTELLUNG DER ERFINDUNG

Es ist daher Aufgabe der Erfindung, ein Verfahren zum Betrieb eines Matrixkonverters sowie einen Matrixkonverter anzugeben, welche die Nachteile der bekannten Matrixkonverterlösungen vermeiden und insbesondere eine vollständig natürliche Kommutierung zwischen den Phasen ermöglichen.

Die Aufgabe wird durch die Gesamtheit der Merkmale der Ansprüche 1 und 4 gelöst. Der Kern der Erfindung besteht darin, eine Kommutierung von einer Phase auf eine andere Phase nur dann zuzulassen, wenn diese als natürliche Kommutierung durchführbar ist, und eine Bedingung dafür anzugeben, die auf einfache Weise in leicht messbaren Grössen des Matrixkonverters ausgedrückt und damit leicht überprüft werden kann.

Eine bevorzugte Ausgestaltung des Verfahrens nach der Erfindung ist dadurch gekennzeichnet, dass der Schaltzustand der Schalter, der Verbindungszustand der Phasen der Quelle und zur Ueberprüfung der Bedingung

$$I_k \cdot (V_k - V_l) \cdot K_{ijkl} < 0$$

die Vorzeichen der Ströme in und der Differenzspannungen zwischen den Phasen der Quelle fortlaufend überwacht bzw. gemessen werden, dass jeweils ein Zeitpunkt vorgegeben wird, zu dem eine Umschaltung vorgenommen werden soll, und dass die Umschaltung einer oder mehrerer ausgewählter Phasen nur zu dem vorgegebenen Zeitpunkt erfolgt, wenn die Bedingung zu diesem Zeitpunkt für die ausgewählten Phasen erfüllt ist, und dass die Umschaltung ansonsten zu einem späteren Zeitpunkt erfolgt, zu dem die Bedingung erfüllt ist. Insbesondere werden als bidirektionale Schalter antiparallele Thyristoren verwendet.

Weitere Ausführungsformen ergeben sich aus den abhängigen Ansprüchen.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1 eine schematische Darstellung der Kommutierung bei einem Konverter mit 4 Eingangsphasen und 3 Ausgangsphasen, die zur Herleitung der Kommutierungsbedingung gemäss der Erfindung verwendet wird und

Fig. 2 das Prinzipschaltbild eines Matrixkonverters mit 6 Eingangsphasen und 3 Ausgangsphasen gemäss einem bevorzugten Ausführungsbeispiel der Erfindung.

WEGE ZUR AUSFÜHRUNG DER ERFINDUNG

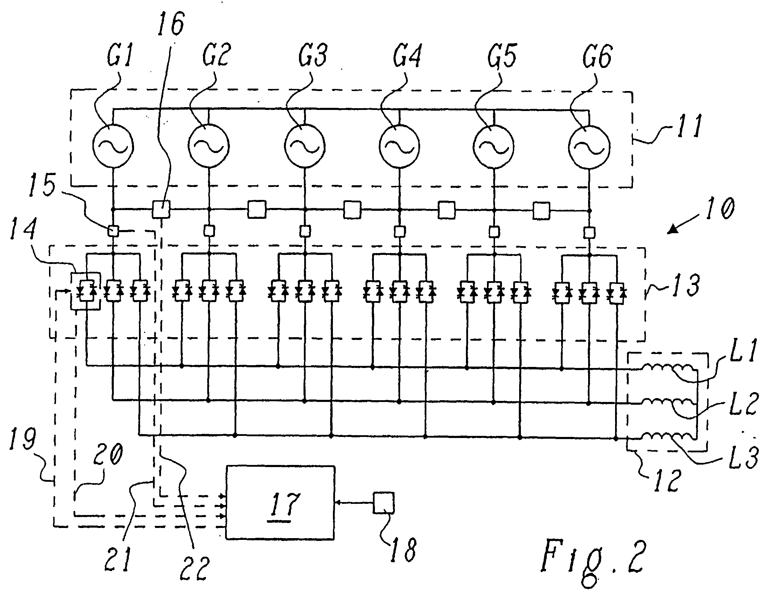

In Fig. 2 ist das Prinzipschaltbild eines Matrixkonverters mit 6 Eingangsphasen und 3 Ausgangsphasen gemäss einem bevorzugten Ausführungsbeispiel der Erfindung dargestellt. Der Matrixkonverter 10 verbindet in einer zeitlichen Abfolge 6 Phasen G1,..,G6 eines Generators 11 als Quelle mit 3 Phasen L1,..,L3 einer Last 12. Der dazu benötigte Leistungsteil 13 umfasst 18 bidirektionale Schalter 14 in Form von antiparallel geschalteten Thyristoren (im allgemeinen Fall gibt es m x n Schalter für m Eingangs/Quellen-Phasen und n Ausgangs/Last-Phasen). Die Schalter 14 sind in einer (6 x 3)-Matrix angeordnet. Für die Ansteuerung der Schalter 14 ist eine Steuerung 17 vorgesehen, die von einer Clock 18 Zeitsignale (eine Clockfrequenz) erhält. Der Schaltzustand der Schalter 14 (EIN, AUS) wird überwacht und jeweils über eine erste Signalleitung 20 an die Steuerung 17 gemeldet. Die Schalter 14 werden von der Steuerung 17 jeweils über eine Steuerleitung 19 angesteuert.

In den einzelnen Phasen G1,..,G6 des Generators 11 ist jeweils eine Strommesseinrichtung 15 angeordnet, die das Vorzeichen des Phasenstromes über eine zweite Signalleitung 21 an die Steuerung 17 meldet. Weiterhin sind zwischen den Phasen G1,..,G6 des Generators 11 Spannungsmesseinrichtungen 16 angeordnet, die das Vorzeichen der jeweiligen Phasendifferenzspannung über eine dritte Signalleitung 22 an die Steuerung 17 melden.

Beim Generator 11 wird im Stator ein rotierendes Feld der Frequenz $f_s$ erzeugt, die von der Drehzahl $f_r$ des Rotors, von der Anzahl p der Polpaare, von der Kommutierungsfrequenz $f_c$ zwischen den Phasen und von der Anzahl der Phasen abhängt. Wenn der Stator z Phasen zulässt, muss der Verbindungskreis z Phasen durch Umdrehung kommutieren, d.h.,

$$(1) \qquad f_c = z \cdot \left( \frac{f_r}{p} - f_s \right)$$

Daraus ergibt sich die Zeit $t_c$ zwischen zwei Kommutierungen zu $t_c = 1/f_c$.

Für die Kommutierung innerhalb des Matrixkonverters 10 wird weiter unten ein Kommutierungskriterium abgeleitet, welches im wesentlichen auf dem Vorzeichen des Produktes der Phasendifferenzspannung zwischen der abzuschaltenden und der anzuschaltenden Phase und des Phasenstromes in der abzuschaltenden Phase basiert. Wenn dieses Produkt negativ ist, erlaubt man die Kommutierung zwischen diesen beiden Phasen. Anderenfalls ist die Kommutierung verboten. Die Kommutierung wird von der Steuerung 17 ausgelöst, wenn nach der zeitlichen Vorgabe eine Kommutierung ansteht, und wenn das Kommutierungskriterium erfüllt ist.

Da zum Kommutieren eine "freie" Phase des Generators 11 benötigt wird und zur Vermeidung von Kurzschlüssen jeweils bestimmte Schalter 14 nicht betätigt werden dürfen, muss die Steuerung 17 in jedem Augenblick wissen, welche der Phasen G1,..,G6 frei sind, d.h. bei welcher der Phasen G1,..,G6 alle zugehörigen Schalter 14 offen sind und keinen Strom tragen. Die Steuerung 17 muss ausserdem wissen, auf welche der Ausgangsphasen L1,..,L3 die Phase geschaltet ist, die kommutiert werden soll, um genau denjenigen Schalter einzuschalten, der sich für diese Kommutierung eignet.

Für einen Generator 11 mit 5 Phasen (bei 3 Phasen L1,..,L3 der Last 12) sind maximal zwei gleichzeitige Kommutierungen möglich, bei 6 Phasen (siehe Fig. 2) sogar drei. Wenn nicht mehr als zwei Kommutierungen möglich sind, werden die entsprechenden Schalter 14 gleichzeitig betätigt. Drei gleichzeitige Kommutierungen sind grundsätzlich nicht erlaubt. Die dritte Kommutierung kann aber durchgeführt werden, wenn eine der beiden ersten Kommutierungen beendet ist und das o.g. Kommutierungskriterium erfüllt ist.

Diese verschiedenen Randbedingungen erlauben es, mit dem Matrixkonverter 10 eine Frequenzänderung ohne Schwierigkeiten mittels der Schalter 14 bzw. der Thyristorpaare zu verwirklichen. Die Steuerung 17 bestimmt die Thyristoren, die geschlossen werden müssen, indem die folgenden Informationen ausgewertet werden:

- die Geschwindigkeit des Rotors und die am Ausgang gewünschte Frequenz legen die Zeitpunkte fest, wo Kommutierungen zwischen den Phasen stattfinden müssen;
- das Vorzeichen oder das Verschwinden der Ströme in den Phasen G1,..,G6 des Generators 11 und die Phasendifferenzspannungen erlauben zu wissen,

  - welche Phasen "frei" und welche "belegt" sind,
  - ob das Kommutierungskriterium erfüllt ist, und
  - wieviele Phasen belegt sind, um drei gleichzeitige Kommutierungen zu verhindern;

- die eingeschalteten Thyristoren erlauben zu wissen, welche Phasen des Generators 11 mit welchen Phasen der Last 12 verbunden sind.

Das o.g. Kommutierungskriterium geht von der physikalischen Ueberlegung aus, dass eine natürliche Kommutierung zwischen zwei Phasen des Generators 11 nur dann erfolgreich durchgeführt werden kann, wenn zu dem Kommutierungszeitpunkt $t_0$ der Absolutwert des Stromes $i_{Gx}$ der Phase Gx, von der man kommutieren will, fällt, während der Absolutwert des Stromes $i_{Gy}$ der Phase Gy, auf die man kommutieren will, steigt:

$$(2) \qquad |i_{Gx}(t_0 + \varepsilon)| - |i_{Gx}(t_0)| < 0 \text{ und } |i_{Gy}(t_0 + \varepsilon)| - |i_{Gy}(t_0)| > 0, \ \varepsilon \in ]0, \delta t_0[.$$

Diese notwendige Bedingung bedeutet, dass die Phase, auf die man kommutieren will, eine höhere elektromotorische Kraft als und denselben Richtungssinn wie diejenige Phase hat, von der man kommutieren will. Da die elektromotorische Kraft jedoch nur im Leerlauf messbar ist, soll das Kriterium mit leicht zugänglichen bzw. messbaren Grössen aufgestellt werden.

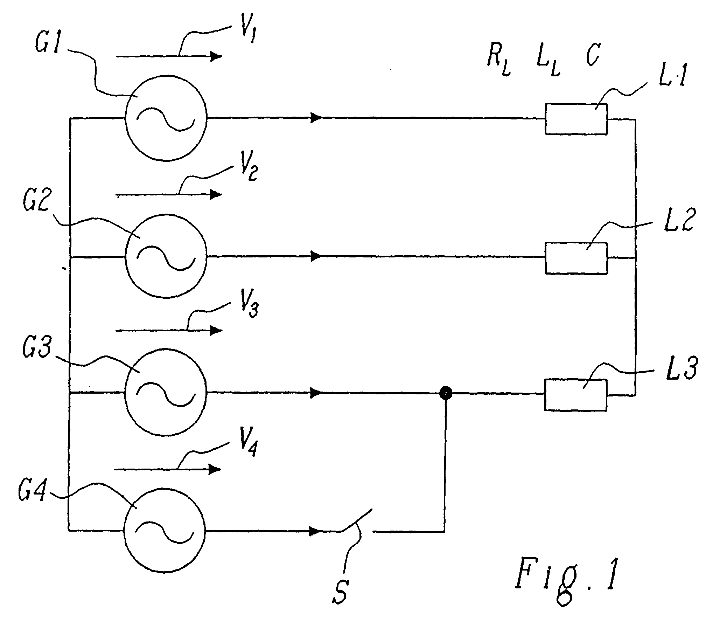

Dies soll nachfolgend für den in Fig. 1 dargestellten einfachsten Fall erfolgen, in dem der Generator 4 Phasen G1,..,G4 hat, und die Last drei Phasen L1,..,L3. Die 4 Phasen G1,..,G4 auf der Eingangsseite sind in einer Stemschaltung verbunden. Vor der Kommutierung (Schalter S der Phase G4 offen) sind die Phasen G1,..,G3 mit den Phasen L1,..,L3 verbunden, die Phase G4 ist "frei". Mit der Kommutierung (durch Schliessen des Schalters S) soll von der Phase G3 auf die Phase G4 kommutiert werden. Wenn die Last den Widerstand $R_L$, die Induktivität $L_L$ und die Kapazität C hat und die Selbstinduktivität und Gegeninduktivität des 4-phasigen Generators durch die Matrix

$$(3) \qquad \begin{bmatrix} L & M_{12} & M_{13} & M_{14} \\ M_{12} & L & M_{23} & M_{24} \\ M_{13} & M_{23} & L & M_{34} \\ M_{14} & M_{24} & M_{34} & L \end{bmatrix}$$

beschrieben werden kann, die Phasenspannungen $V_1,..,V_4$ sind, und weiterhin gilt:

$$(4) \qquad V_\alpha(t_0 + \varepsilon) = V_\alpha(t_0) + \delta V_\alpha$$

und

$$(5) \quad \frac{dI_\alpha(t_0 + \varepsilon)}{dt} = \frac{dI_\alpha(t_0)}{dt} + \frac{d\delta I_\alpha}{dt}, \ \alpha=1,..,4$$

kann folgendes Gleichungssystem aufgestellt werden, wobei anstelle der Indizes 1,..,4 die allgemeinen Indizes i,j,k,l verwendet werden:

$$(6) \quad \begin{bmatrix} 1 & 1 & 1 & 1 \\ -(L+L_c-M_{ij}) & L+L_c-M_{ij} & M_{jk}-M_{ik} & M_{jl}-M_{il} \\ M_{ik}-M_{ij} & -(L+L_c-M_{jk}) & L+L_c-M_{jk} & M_{kl}-M_{jl} \\ M_{ik}-M_{il} & -(L-M_{kl}) & L-M_{kl} & M_{jk-M_{jl}} \end{bmatrix} \cdot \begin{bmatrix} \dfrac{d\delta I_i}{dt} \\ \dfrac{d\delta I_j}{dt} \\ \dfrac{d\delta I_k}{dt} \\ \dfrac{d\delta I_l}{dt} \end{bmatrix} = \begin{bmatrix} 0 \\ 0 \\ 0 \\ V_k-V_l \end{bmatrix}$$

oder

$$(7) \quad [A_{ij}] \cdot \begin{bmatrix} \dfrac{d\delta I_i}{dt} \\ \dfrac{d\delta I_j}{dt} \\ \dfrac{d\delta I_k}{dt} \\ \dfrac{d\delta I_l}{dt} \end{bmatrix} = (V_k - V_l) \begin{bmatrix} 0 \\ 0 \\ 0 \\ 1 \end{bmatrix}.$$

Unter der Voraussetzung, dass die Matrix $[A_{ij}]$ nicht singulär ist, kann das Gleichungssystem aufgelöst werden zu:

$$(8) \quad \begin{bmatrix} \dfrac{d\delta I_i}{dt} \\ \dfrac{d\delta I_j}{dt} \\ \dfrac{d\delta I_k}{dt} \\ \dfrac{d\delta I_l}{dt} \end{bmatrix} = (V_k - V_l) \cdot [A_{ij}]^{-1} \begin{bmatrix} 0 \\ 0 \\ 0 \\ 1 \end{bmatrix}.$$

Es existiert also eine Konstante $K_{ijkl}$ dergestalt, dass

$$(9) \quad \frac{d\delta I_k}{dt} = (V_k - V_l) \cdot K_{ijkl}$$

gilt, wobei die Konstante $K_{ijkl}$ von den Gegeninduktivitäten der Phasen des Generators und der Induktivität der Last abhängt.

Damit eine natürliche Kommutierung erfolgreich durchgeführt werden kann, ist es notwendig, dass der Strom

$I_k$ der Phase, von der kommutiert werden soll, nach der Kommutierung durch Null geht. Dies äussert sich in der Bedingung:

$$(10) \qquad \frac{d\delta I_k}{dt} \cdot \frac{dI_k}{dt} < 0.$$

Zusammen mit Gleichung (9) ergibt sich schliesslich das Kommutierungskriterium:

$$(11) \qquad I_k \cdot (V_k - V_l) \cdot K_{ijkl} < 0.$$

Wenn also die von den Selbstinduktivitäten und Gegeninduktivitäten des Generators und der Last bestimmten Konstanten $K_{ijkl}$ bekannt sind, lässt sich durch die leicht messbaren Grössen Phasenstrom $I_k$ und Phasendifferenzspannung $V_k$-$V_l$ Vorzeichen jederzeit bestimmen, ob eine vorgesehene natürliche Kommutierung zwischen den Phasen k und I des Generators durchgeführt werden kann oder nicht (die Indizes i und j beziehen sich bei diesem Beispiel auf diejenigen zwei Phasen, die am Kommutierungsvorgang zwischen den Phasen k und I nicht teilnehmen; bei mehr als vier Phasen ergeben sich entsprechend mehr Indizes). Die Bedingung bzw. Regel (11) hängt dabei nur von den Vorzeichen der Ströme und Spannungen, nicht jedoch von deren tatsächlichem Wert ab. Es können daher die notwendigen Informationen für die Kommutierungsbedingung mit sehr einfachen Detektoren bzw. Messeinrichtungen gewonnen werden.

Durch die Kombination aufeinanderfolgender Kommutierungen rotiert der Pfad der Statorströme um die Generatorachse. Die Ankerrückwirkung rotiert bereits mit einem konstanten Modul bei 50 oder 60 Hz, d.h., der Netzfrequenz. Die Rotation der Statorstrompfade addiert sich zu der 50/60 Hz-Rotation und führt zu einer Rotation der Ankerrückwirkung mit einer deutlich anderen Frequenz, die durch Aenderung der Kommutierungrate eingestellt werden kann. Dadurch wird sowohl ein synchroner als auch ein asynchroner Betrieb möglich.

Der Entscheidungsprozess, der bei einem Matrixkonverter 10 gemäss Fig. 2 zur Ansteuerung der Schalter 14 führt, ist sehr einfach:

Zunächst teilt die Clock 18 der Steuerung 17 mit, wann gemäss der gewünschten Frequenz und ggf. einer rückgekoppelten Information eine neue Kommutierung stattfinden sollte, d.h., wann die drei gerade mit der Last 12 verbundenen Phasen durch andere ersetzt werden sollten.

Durch die fortlaufende Ueberwachung der Schalter 14 und Phasen G1,..,G6 weiss die Steuerung 17, welche Phasen frei sind bzw. keinen Strom führen, und welche Phasen darauf sicher kommutiert werden können. Wenn eine oder zwei Kommutierungen möglich sind, werden die zugehörigen Schalter 14 getriggert. Ist zu dem vorgesehenen Kommutierungszeitpunkt die Bedingung (11) nicht erfüllt, wird die Kommutierung später ausgeführt, sobald die Bedingung erfüllt ist. Wie bereits oben erwähnt, wird die gleichzeitige Kommutierung von drei Phasen vermieden. Eine (an sich mögliche) zweite und eine dritte Kommutierung werden aufgeschoben, bis sie sicher durchgeführt werden können.

Eine an den Matrixkonverter 10 angeschlossene Synchronmaschine kann sowohl als Motor als auch als Generator betrieben werden. Sie kann vom Motorbetrieb auf den Generatorbetrieb umgeschaltet werden und so als Startermotor arbeiten. Sowohl ein voreilender wie auch ein nacheilender Betrieb sind ohne Aenderung des Steuerverfahrens möglich. Auch ist ein eigenständiger Betrieb möglich, bei dem die Spannung durch die Erregung des Generators bestimmt wird, und die Steuerung der Frequenz zwischen dem Generator 11 und dem Konverter aufgeteilt ist.

Bei Induktionsmaschinen muss auf die Spannung während des Startvorgangs geachtet werden. Die mittlere Spannung kann durch ein verzögertes Triggern der Thyristoren bei Stromumkehr reduziert werden.

Bei Antriebsmotoren gibt es zwei Möglichkeiten der Umsetzung desselben Prinzips: Die eine Möglichkeit ist der Einsatz eines Transformators mit zwei Sekundärwicklungen, um aus einem 3-phasigen Netz ein 6-phasiges zu erzeugen. Eine andere Möglichkeit ist die Verwendung eines n-phasigen Motors, der direkt ans Netz angeschlossen ist.

Die harmonischen Störungen werden reduziert, wenn die Kommutierung nur zwischen benachbarten Phasen erlaubt wird. Bei einer kleinen Anzahl von vorhandenen Phasen ist die Wahrscheinlichkeit einer erlaubten Kommutierung gering und dementsprechend ist der erzielbare Frequenzbereich beschränkt. Aber selbst bei 4 Phasen ist der gesamte Frequenzbereich zugänglich, wenn Kommutierungen auch zwischen nicht benachbarten Phasen zugelassen werden. Die harmonischen Störungen werden auch reduziert, wenn die Anzahl der Phasen erhöht wird. Hierdurch ergeben sich mehr Gelegenheiten für eine erlaubte Kommutierung und der Frequenzbereich wird somit erweitert. Da die Kosten des Konverters aber eng mit der Anzahl der Phasen verknüpft sind, muss zwischen der Anzahl der Phasen und dem Filterungsaufwand ein vernünftiger Kompromiss gesucht werden.

Mit dem vorgeschlagenen Matrixkonverter können die Durchlassverluste gegenüber herkömmlichen Konvertern um einen Faktor 2 gesenkt werden. Die Reduzierung der Kommutierungsverluste ist von der jeweiligen Anwendung abhängig. Für einen 6-phasigen 85 Hz-Generator, der auf 3-phasige 50 Hz umgewandelt wird, ergibt sich eine Reduzierung der Kommutierungsverluste um mehr als einen Faktor 2 im Vergleich zu einem 12-pulsigen Gleichrichter/ Inverter.

Der vorgeschlagene Matrixkonverter hat keinen inhärenten reaktiven Leistungsverbrauch. Der Zyklokonverter z.B., der ebenfalls eine direkte AC/AC-Umwandlung durchführt, hat einen sehr kleinen Leistungsfaktor wegen der Triggerverzögerungen, die zum Erreichen einer sinusförmigen Spannung notwendig sind. Indirekte Konverter zeigen ebenfalls einen reduzierten Leistungsfaktor wegen des Sicherheitswinkels und der Magnetisierungsleistung, die zum Zerhacken der Gleichströme notwendig ist.

Insgesamt ergeben sich mit der Erfindung die folgenden Vorteile:

(1) hinsichtlich des Zyklokonverters:

- Der Leistungsfaktor des Konverters ist nahezu 1 anstatt 0,7, so dass die Eingangsleistung, die Leistung der Komponenten und die Verlustleistung reduziert sind.
- Unabhängig vom verbesserten Leistungsfaktor führt der neue Konversionsprozess zu inhärenten Verlusten, die um einen Faktor 2 kleiner sind und so ein leichteres und billigeres Kühlsystem ermöglichen.
- Die Ausgangsfrequenz ist nicht auf 1/3 der Eingangsfrequenz beschränkt.
- Die Steuerungselektronik ist sehr einfach

(2) hinsichtlich des indirekten AC/DC/AC-Konverters:

- Die eingangsseitigen und ausgangsseitigen Leistungsfaktoren sind gleich, so dass Eingangsleistung und Leistungsbereich der Bauteile minimiert sind.
- Der Betrieb ist vollständig reversibel.
- Es gibt keine Energiezwischenspeicherung, was zu Einsparungen bei Kosten und Verlusten führt.
- Es gibt keine pulsierenden Drehmomente, nur einen geringen Gehalt an Harmonischen, und kein Leistungsabfall am Eingang wegen zerhackter Gleichströme.
- Eine geringe Verlustleistung.

Das neue Konverter-Konzept hat daher das Potential, die Attraktivität statischer Frequenzkonverterlösungen weiter zu verbessern.

BEZUGSZEICHENLISTE

| 10 | Matrixkonverter |
|---|---|
| 11 | Generator |
| 12 | Last |
| 13 | Leistungsteil |
| 14 | Schalter (bidirektional) |
| 15 | Strommesseinrichtung |
| 16 | Spannungsmesseinrichtung |
| 17 | Steuerung |
| 18 | Clock |
| 19 | Steuerleitung |
| 20,..,22 | Signalleitung |
| G 1 ,..,G6 | Phase (Generator) |
| L1,..,L3 | Phase (Last) |
| S | Schalter |
| $V_i,..V_l$ | Spannung (Generatorphase) |

**Patentansprüche**

1. Verfahren zum Betrieb eines Matrixkonverters (10), bei welchem m Phasen (G1,..,G6) einer Wechselspannung abgebenden Quelle (11) mit n Phasen (L1,..,L3) einer Last (12) über eine Mehrzahl von in einer (m x n)-Matrix angeordneten, steuerbaren bidirektionalen Schaltern (14) abwechselnd verbunden werden, **dadurch gekennzeichnet, dass** ein Umschalten von einer ersten Phase (Gk) der Quelle (11) auf eine zweite Phase (GI) der Quelle (11) nur dann vorgenommen wird, wenn die Bedingung

$$I_k \cdot (V_k - V_l) \cdot K_{ijkl} < 0$$

erfüllt ist, wobei $I_k$ und $V_k$ der Strom und die Spannung der ersten Phase (Gk), $V_l$ die Spannung der zweiten Phase (Gl) und $K_{ijkl}$ jeweils eine für die Gegeninduktivität zwischen den Phasen (G1,..,G6) der Quelle (11) und die Induktivität der Last (12) charakteristische Konstante ist.

2. Verfahren nach Anspruch 1, **dadurch gekennzeichnet, dass** der Schaltzustand der Schalter (14), der Verbindungszustand der Phasen (G1,..,G6) der Quelle (11) und zur Ueberprüfung der Bedingung

$$I_k \cdot (V_k - V_l) \cdot K_{ijkl} < 0$$

die Vorzeichen der Ströme in und der Differenzspannungen zwischen den Phasen (G1,..,G6) der Quelle (11) fortlaufend überwacht bzw. gemessen werden, dass jeweils ein Zeitpunkt vorgegeben wird, zu dem eine Umschaltung vorgenommen werden soll, und dass die Umschaltung einer oder mehrerer ausgewählter Phasen nur zu dem vorgegebenen Zeitpunkt erfolgt, wenn die Bedingung zu diesem Zeitpunkt für die ausgewählten Phasen erfüllt ist, und dass die Umschaltung ansonsten zu einem späteren Zeitpunkt erfolgt, zu dem die Bedingung erfüllt ist.

3. Verfahren nach einem der Ansprüche 1 und 2, **dadurch gekennzeichnet, dass** die Quelle ein Generator (11) ist, und dass die Zahl m der Phasen des Generators (11) grösser ist als die Zahl n der Phasen der Last (12).

4. Verfahren nach einem der Ansprüche 1 bis 3, **dadurch gekennzeichnet, dass** als bidirektionale Schalter (14) antiparallele Thyristoren verwendet werden.

5. Matrixkonverter (10) zur Durchführung des Verfahrens, umfassend eine Mehrzahl von in einer (m x n)-Matrix angeordneten, steuerbaren bidirektionalen Schaltern (14), welche von einer Steuerung (17) gesteuert m Eingänge wahlweise mit n Ausgängen verbinden, **dadurch gekennzeichnet, dass** erste Mittel (15) zur Bestimmung der Vorzeichen der Ströme in den Eingängen und zweite Mittel (16) zur Bestimmung der Vorzeichen der Spannungen zwischen den Eingängen vorgesehen sind, und dass die ersten und zweiten Mittel (15 bzw. 16) mit der Steuerung (17) in Wirkverbindung stehen.

6. Matrixkonverter nach Anspruch 5, **dadurch gekennzeichnet, dass** die Schalter (14) mit der Steuerung (17) über eine Signalleitung (20) in Verbindung stehen, über welche Informationen über der Schaltzustand der Schalter (14) an die Steuerung (17) übermittelt werden.

7. Matrixkonverter nach einem der Ansprüche 5 und 6, **dadurch gekennzeichnet, dass** die bidirektionalen Schalter (14) antiparallel geschaltete Thyristoren umfassen.

## Claims

1. Method for operation of a matrix converter (10), in which m phases (G1, ..., G6) of a source (11) which emits an AC voltage are connected alternately to n phases (L1, ..., L3) of a load (12) via two or more controllable bidirectional switches (14) which are arranged in a (m x n) matrix, **characterized in that** switching from a first phase (Gk) of the source (11) to a second phase (Gl) of the source (11) is carried out only on the condition

$$I_k - (V_k - V_l) \cdot K_{ijkl} < 0$$

where $I_k$ and $V_k$ are the current and the voltage of the first phase, (Gk), $V_l$ is the voltage of the second phase (Gl), and $K_{ijkl}$ is in each case a constant which is characteristic of the mutual induction between the phases (G1, ..., G6) and the source (11) and the inductance of the load (12).

2. The method according to Claim 1, **characterized in that** the switching state of the switch (14), the connection state of the phases (G1, ..., G6) of the source (11) and, in order to check the condition

$$I_k \cdot (V_k - V_l) \cdot K_{ijkl} < 0$$

the mathematical signs of the currents in and the difference voltages between the phases (G1, ..., G6) of the source (11) are monitored or measured continuously, **in that** a time is in each case predetermined at which switching should be carried out, and **in that** the switching of one or more selected phases takes place only at a predetermined time when the condition for the selected phases is satisfied at this time, and **in that** the switching otherwise takes place at a later time, at which the condition is satisfied.

3. Method according to one of Claims 1 and 2, **characterized in that** the source is a generator (11), and **in that** the number m of phases of the generator (11) is greater than the number n of phases of the load (12).

4. Method according to one of Claims 1 to 3, **characterized in that** back-to-back parallel-connected thyristors are used as bi-directional switches (14).

5. Matrix converter (10) for carrying out the method, comprising two or more controllable bi-directional switches (14) which are arranged in a (m x n) matrix and which, controlled by a controller (17), functionally connect m inputs to n outputs, **characterized in that** first means (15) are provided for the determination of the mathematical signs of the currents in the inputs, and the second means (16) are provided for the determination of the mathematical signs of the voltages between the inputs, and **in that** the first and the second means (15 and 16, respectively) are operatively connected to the controller (17).

6. Matrix converter according to Claim 5, **characterized in that** the switches (14) are connected to the controller (17) via a signal line (20), via which information about the switching state of the switches (14) is transmitted to the controller (17).

7. Matrix converter according to one of Claims 5 and 6, **characterized in that** the bidirectional switches (14) are back-to-back parallel-connected thyristors.

## Revendications

1. Procédé d'utilisation d'un convertisseur matriciel (10), dans lequel m phases (G1, ..., G6) d'une source (11) à n phases (L1, ..., L3) qui délivre une tension alternative à une charge (12) sont reliées en alternance par l'intermédiaire d'une pluralité de commutateurs bidirectionnels asservis (14) disposés en matrice (m x n), **caractérisé en ce que** la commutation d'une première phase (Gk) de la source (11) à une deuxième phase (G1) de la source (11) n'est réalisée que lorsque la condition

$$I_k \cdot (V_k - V_l) \cdot K_{ijkl} < 0$$

dans laquelle $I_k$ et $V_k$ représentent respectivement le courant et la tension de la première phase (Gk), $V_l$ représente la tension de la deuxième phase (G1) et $K_{ijkl}$ représente une constante caractéristique de l'inductance mutuelle entre les phases (G1, ..., G6) de la source (11) et l'inductance de la charge (12), est satisfaite.

2. Procédé selon la revendication 1, **caractérisé en ce que** l'état de commutation des commutateurs (14), l'état de liaison des phases (G1, ..., G6) de la source (11) et, pour vérifier la condition

$$I_k \cdot (V_k - V_l) \cdot K_{ijkl} < 0$$

le signe des courants des phases (G1, ..., G6) de la source (11) et des différences de tension entre ces phases est surveillé respectivement mesuré en permanence, **en ce que** l'instant auquel chaque commutation doit être réalisée est prédéterminé, **en ce que** la commutation d'une ou de plusieurs phases sélectionnées a lieu à l'instant prédéterminé uniquement si à cet instant la condition est satisfaite pour les phases sélectionnées et **en ce que** sinon, la commutation a lieu à un instant ultérieur auquel la condition est satisfaite.

3. Procédé selon l'une des revendications 1 et 2, **caractérisé en ce que** la source est un générateur (11) et **en ce**

**que** le nombre m des phases du générateur (11) est supérieur au nombre n des phases de la charge (12).

4. Procédé selon l'une quelconque des revendications 1 à 3, **caractérisé en ce que** comme commutateurs bidirectionnels (14), on utilise des thyristors antiparallèles.

5. Convertisseur matriciel (10) en vue de la mise en oeuvre du procédé, qui comprend une pluralité de commutateurs bidirectionnels asservis (14) disposés en matrice (m x n) qui, sous le contrôle d'une commande (17), relient sélectivement m entrées à n sorties, **caractérisé en ce que** des premiers moyens (15) de détermination du signe des courants des entrées et des deuxièmes moyens (16) de détermination du signe des tensions entre les entrées sont prévus et **en ce que** les premiers et les deuxièmes moyens (15 et 16) coopèrent avec la commande (17).

6. Convertisseur matriciel selon la revendication 5, **caractérisé en ce que** les commutateurs (14) sont reliés à la commande (17) par une ligne de signalisation (20) par laquelle des informations sur l'état de commutation des commutateurs (14) sont transmises à la commande (17) .

7. Convertisseur matriciel selon l'une des revendications 5 et 6, **caractérisé en ce que** les commutateurs bidirectionnels (14) sont des thyristors raccordés de manière antiparallèle.

Fig. 1

Fig. 2